# EUROPÄISCHE PATENTSCHRIFT

(11) **EP 0 790 478 B1**
(45) Veröffentlichungstag und Bekanntmachung des Hinweises auf die Patenterteilung: **19.12.2001**
(21) Anmeldenummer: 97101083.0
(22) Anmeldetag: 24.01.1997
(51) Int. Cl.: G01B 5/012, G01B 7/012, G01B 21/04

(54) **Koordinatenmessgerät mit einem Taststift, dessen Orientierung einstellbar ist**
Coordinate measuring machine with positionable feeler head
Machine de mesure coordonnées avec palpeur orientable

(30) Priorität: 16.02.1996 DE 19605776
(43) Veröffentlichungstag der Anmeldung: 20.08.1997
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Wiedmann, Wolfgang, 73434 Aalen (DE); Bernhardt, Ralf, 73431 Aalen (DE); Lonardoni, Ronald, 73463 Westhausen (DE)

(56) Entgegenhaltungen:
- EP-A- 0 389 108
- EP-A- 0 392 660
- DE-A- 3 621 626
- DE-A- 4 424 225
- US-A- 4 168 576
- US-A- 4 523 450

## Beschreibung

Die Erfindung betrifft ein Koordinatenmeßgerät (KMG) mit einem Taststift, dessen räumliche Orientierung maschinengesteuert einstellbar ist. Solche Koordinatenmeßgeräte besitzen in der Regel ein sogenanntes "aktives Dreh- Schwenkgelenk", über das der Taststift oder der Tastkopf selbst an dem Meßarm des Koordinatenmeßgerätes befestigt ist. Das "aktive Dreh-Schwenkgelenk" enthält separate Antriebe für die beiden Dreh-bzw. Schwenkachsen. Ein solches aktives Dreh- Schwenkgelenk ist beispielsweise auch in der DE 37 40 070 sowie der dazu korrespondierenden US-PS 4,888,877 beschrieben.

Nachteilig hierbei ist der nicht unerhebliche Aufwand, der für die Antriebe, die Sensorik für die Rückmeldung der Lage des Taststifts etc. getrieben werden muß, insbesondere wenn zusätzlich auf eine möglichst kompakte Bauform des Dreh-Schwenkgelenks Wert gelegt wird. Im allgemeinen werden mit solchen aktiven Dreh- Schwenkgelenken die Tastköpfe selbst verschwenkt, während es nur sehr schwer möglich ist, allein den Taststift zu verschwenken. Denn dann müßte das Dreh-Schwenkgelenk von seinem Gewicht her so ausgelegt werden, daß es die für den auslenkbaren Taststift im Tastkopf maximal zulässige Masse deutlich unterschreitet.

Aus der DE 28 04 398 ist außerdem ein passives Dreh-Schwenkgelenk bekannt. Dort ist der Tastkopf über eine mit Rasten oder Reibungsfedern versehene Gelenkverbindung am Meßarm des Koordinatenmeßgerätes befestigt. Der Tastkopf kann dann in eine andere räumliche Orientierung gebracht werden, indem die Meßmaschine den Schaft des Tastkopfs gegen ein Hindernis, beispielsweise eine Kante am Werkstück oder ein separates, zu diesem Zwecke auf dem Tisch des KMG aufgestelltes Hindernis so verfährt, daß der Schaft dann beim Weiterfahren aus der z.B. vertikalen in eine horizontal ausgerichtete Stellung umschlägt.

Mit diesem Verfahren läßt sich der Taster allerdings nicht sonderlich genau ausrichten.

Es ist die Aufgabe der vorliegenden Erfindung, ein Koordinatenmeßgerät zu schaffen, das mit einem passiven Gelenk für die Ausrichtung des Tasters versehen ist und dennoch ein möglichst genaues maschinengesteuertes Ausrichten des Tasters ermöglicht.

Diese Aufgabe wird durch eine Ausbildung gemäß den im Anspruch 1 angegebenen Merkmalen gelöst.

Gemäß der Erfindung ist im Arbeitsbereich des Koordinatenmeßgeräts eine Einrichtung befestigt, von der der Antastformkörper, d.h. die Tastkugel des Taststifts zentriert aufnehmbar ist. Nach dem Eintasten in die Zentrieraufnahme wird dann bei entklemmter Dreh- bzw. Schwenkachse auf kreisförmigen Bahnen bezogen auf die Position des Antastformkörpers als Mittelpunkt verfahren. So werden die ohnehin vorhandenen Antriebe der Meßschlitten des Koordinatenmeßgeräts benutzt, um den Taster bezüglich seiner räumlichen Orientierung maschinengesteuert einzustellen und es sind keine separaten Antriebe für die Dreh- bzw. die Schwenkachse erforderlich.

Auf diese Weise ist außerdem eine sehr genaue Ausrichtung des Tasters möglich, denn da der Mittelpunkt der Tastkugel in der eingetasteten Zentrieraufnahme raumfest bleibt, während das Koordinatenmeßgerät mit der für dieses Meßinstrument typischen Genauigkeit auf einer kreisförmigen Bahn fährt, ergibt sich unter Berücksichtigung des konstanten Abstandes zwischen der Tastkugel und den Dreh- bzw. Schwenkachsen eindeutig und genau die gewünschte Winkeländerung.

Es ist vorteilhaft, wenn die Einrichtung zur zentrierten Aufnahme des Antastformkörpers auf ihrer Oberfläche mit einer Vielzahl von Zentrierstellen versehen ist, was beispielsweise dadurch geschehen kann, daß der Körper nach Art eines Igels oder eines Morgensterns aufgebaut ist, oder daß die Zentrierstellen aus einer Vielzahl von nebeneinanderliegenden sphärischen Körpern wie z.B. Kugeln oder Halbkugeln gebildet sind. Auf diese Weise findet sich auch bei beliebiger Orientierung des Taststifts immer eine zugängliche Zentrierstelle, in die eingetastet werden kann. Für den Fall, daß der Taststift über einen größeren Winkelbereich gedreht bzw. geschwenkt werden muß, können mehrere Dreh- bzw. Schwenkbewegungen nacheinander durchgeführt werden, wobei zwischen den einzelnen Vorgängen auch die Zentrieraufnahme gewechselt werden kann. Auf diese Weise kann auch mit Zentrieraufnahmen gearbeitet werden, die Eintastungen nur aus einem begrenzten Winkelbereich heraus zulassen.

Der Taststift ist zweckmäßig um zwei aufeinander senkrecht stehende Achsen schwenkbar gelagert, wobei diese Achsen durch ein kardanisches Lager oder beispielsweise auch durch ein sphärisches Lager gebildet sein können. Besonders vorteilhaft ist es, wenn dieses Lager maschinengesteuert geklemmt bzw. für den Vorgang der Neuorientierung der Taststiftausrichtung entklemmt werden kann. Dies kann beispielsweise durch eine Einrichtung erfolgen, die aus einem Permanentmagneten und einem Elektromagneten aufgebaut ist, wie das in der DE-PS 34 34 116 beschrieben ist.

Weitere Vorteile der Erfindung ergeben sich aus der nachfolgenden Beschreibung von Ausführungsbeispielen anhand der Figuren 1-6 der beigefügten Zeichnungen.
- Figur 1: ist eine perspektivische Prinzipskizze, die ein Koordinatenmeßgerät vom Portaltyp mit einem schwenkbaren Taster während des Vorgangs der Neuorientierung der Tasterausrichtung zeigt;
- Figur 2: ist eine Skizze, in der im Vergleich zu Figur 1 in stark vergrößertem Maßstabe der Taststift (x) aus Figur 1 in zwei Stellungen vor und nach einem Einstellvorgang dargestellt ist;
- Figur 3: ist eine vereinfachte Seitenansicht des unteren Teils. der Pinole (y) aus Figur 1 mit dem daran befestigten Tastkopf und dem Dreh- Schwenkgelenk für den Taststift in Seitenansicht;
- Figur 4: ist eine Schnittzeichnung des Dreh- Schwenkgelenks (z) aus Figur 3 in vergrößertem Maßstabe;
- Figur 5: ist eine Schnittzeichnung eines zweiten, alternativen Ausführungsbeispiels für das Dreh- Schwenkgelenk aus Figur 4;
- Figur 6: zeigt ein alternatives Ausführungsbeispiel für die Einrichtung (10) zur zentrierten Aufnahme der Tastkugel (19) in Figur 1 bzw. 2.

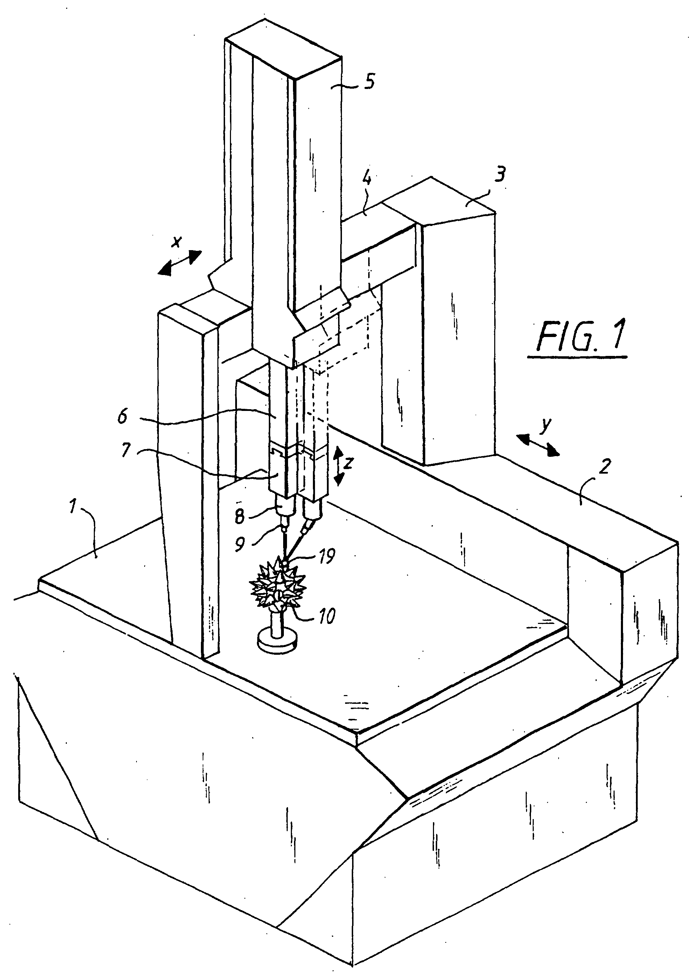

Das in Figur 1 dargestellte Koordinatenmeßgerät ist vom sogenannten Portaltyp. Entsprechend ist das dort mit (3) bezeichnete, brückenförmige Portal, das sich z.B. über Luftlager mit einem Fuß auf dem Meßtisch (1) und mit dem anderen Fuß auf der daran befestigten Führungsbahn (2) abstützt, in Richtung des mit (y) bezeichneten Pfeils motorisch verfahrbar. Der Querschlitten (5) ist auf dem als x-Führung ausgebildeten Querträger (4) beweglich gelagert. Der mit (6) bezeichnete, eigentliche Meßarm, die sogenannte Pinole ist im Querschlitten (5) vertikal (z) verschiebbar geführt und trägt an ihrer Unterseite einen sogenannten "messenden" Tastkopf (7), an dem der eigentliche Taststift (9) mit seiner Tastkugel (19) über ein passives Dreh- Schwenkgelenk (8) befestigt ist. Der Tastkopf (7) kann beispielsweise der in der DE-OS 44 24 225.5 beschriebene, aus drei aufeinander aufbauenden Parallelogrammführungen gebildete Tastkopf sein.

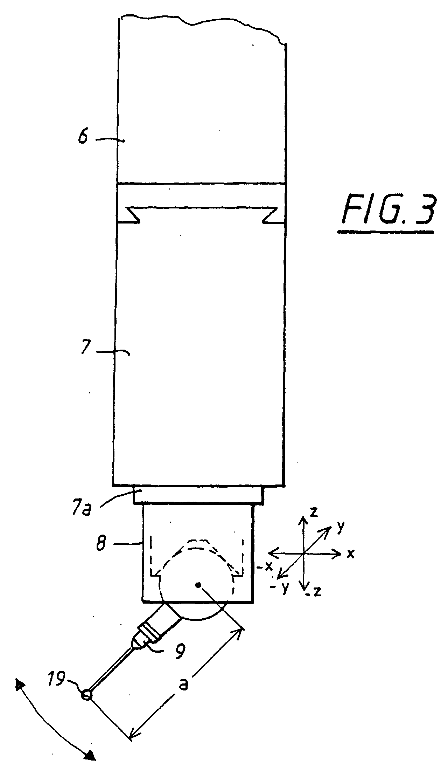

In Figur 3 ist der untere Teil der Pinole (6) mit dem daran befestigten Tastkopf (7), dem Dreh- Schwenkgelenk (8) und dem daran auswechselbar befestigten Taststift (9) nochmals vergrößert dargestellt. Wie durch die neben dem Dreh-Schwenkgelenk (8) angezeichneten Pfeile symbolisiert, ist das Dreh- Schwenkgelenk (8) an dem in allen drei Raumrichtungen auslenkbaren, beweglichen Teil (7a) des Tastkopfs (7) befestigt. Auf diese Weise ist der Taststift (9) nachgiebig an der Pinole (6) gelagert, und Auslenkungen des Taststifts (9) im Zuge eines Meß- bzw. Antastvorganges werden in an sich bekannter Weise durch die im Tastkopf (7) angeordneten, den Auslenkrichtungen zugeordneten Meßsysteme erfaßt.

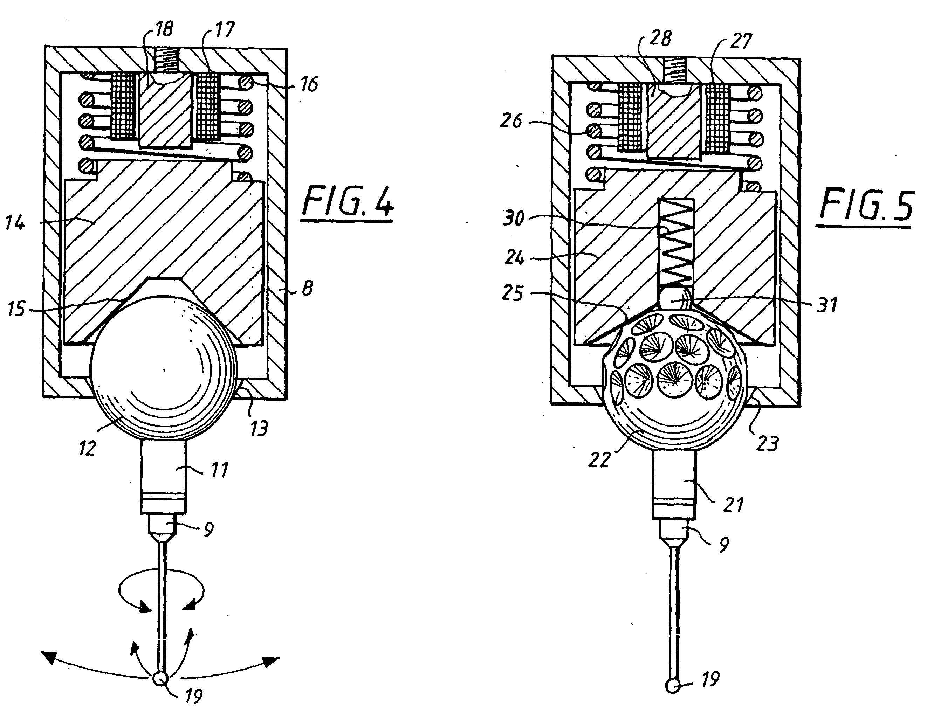

Den Aufbau des Dreh- Schwenkgelenks (8) zeigt detaillierter die Figur 4. Es besteht im wesentlichen aus einem Kugelgelenk, wobei die Kugel (12), an der eine Aufnahme (11) für den Taststift (9) befestigt ist, in einer ringförmigen Lagerpfanne (13) liegt. Zur Klemmung der Kugel dient ein zylindrischer Körper (14), der im Gehäuse (8) geradegeführt ist und von einer Schraubenfeder (16) in Richtung auf das ringförmige Lager (13) gedrückt wird. Er besitzt an seiner Unterseite eine konische Bohrung (15), die auf die Kugeloberfläche drückt. Der Körper (14) besteht zumindest im oberen Teil aus Weicheisen.

Zur Entklemmung der Kugel (12) ist koaxial zur Feder (16) ein Schaltmagnet eingesetzt, der aus einem Permanentmagneten (18) und einem darum gelegten Elektromagneten (17) besteht. So läßt sich durch einen kurzen Stromstoß das Feld des Permanentmagneten (18) derart verstärken, daß das Teil (14) an den Permanentmagneten (18) angezogen wird, wo es haften bleibt, bis es durch einen Stromimpuls mit entgegengesetzter Polarität wieder abgeworfen wird.

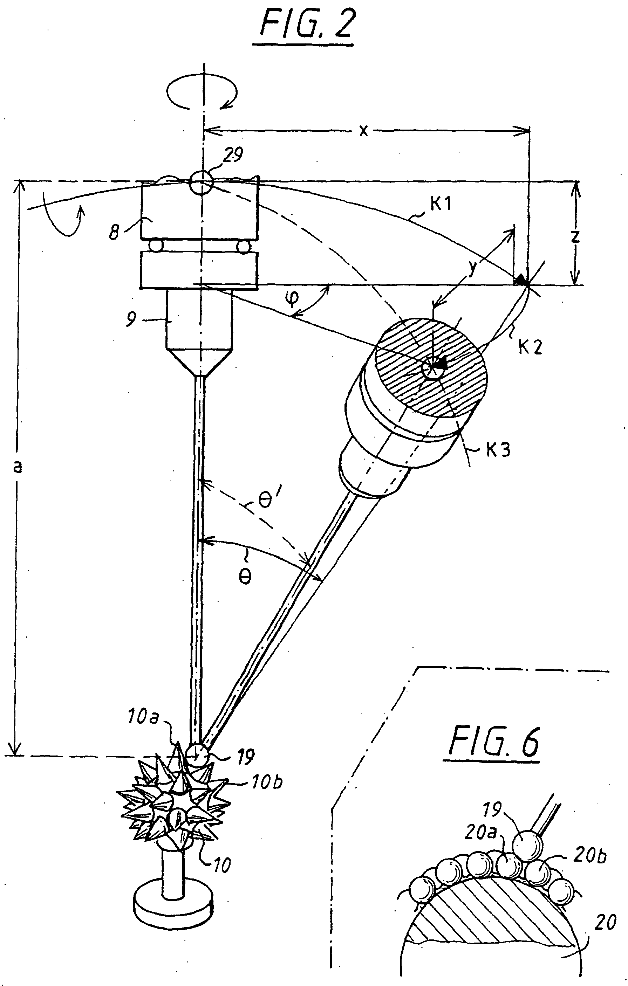

Im normalen Meßbetrieb des Koordinatenmeßgerätes ist die Kugel (12) des Dreh- Schwenkgelenks (8) geklemmt, so daß sich die vom Werkstück auf die Tastkugel (19) ausgeübten Meßkräfte auf den Tastkopf (7) (Figur 1) übertragen. Nachdem die Messungen in einer bestimmten Ausrichtung des Taststifts abgeschlossen sind, wird der Taststift neu ausgerichtet. Hierbei wird folgendermaßen vorgegangen: An einer Stelle im Meßbereich des Koordinatenmeßgerätes ist wie in Figur 1 und in der vergrößerten Darstellung nach Figur 2 ersichtlich ein Zentrierkörper (10) aufgebaut. Dieser besitzt nach Art eines Igels oder Morgensterns auf seiner sphärischen Oberfläche eine Vielzahl von nach außen gerichteten Spitzen, die so eng zusammenstehen, daß zwischen den Spitzen Vertiefungen entstehen, in die die Tastkugel (19) selbstzentrierend eintasten kann. Sobald der Taststift mit seiner Tastkugel selbstzentrierend in eine zugängliche Vertiefung eingetastet ist, wird die Kugel (12) im passiven Dreh- Schwenkgelenk (8) entklemmt. Anschließend verfährt das Koordinatenmeßgerät durch simultanes Ansteuern mindestens zweier Antriebe den Mittelpunkt der Kugel (12) auf einer Kreisbahn um den Mittelpunkt der Tastkugel (19). Dies ist in der Figur 2 näher erläutert. Dort ist mit (29) der Punkt im Dreh-Schwenkgelenk (8) bezeichnet, um den der Taststift (9) gedreht bzw. geschwenkt werden kann. Seine Entfernung (a) vom Mittelpunkt der Tastkugel (19) ist bekannt und kann beispielsweise durch Kalibrierung an einem Prüfnormal bestimmt werden. Im Zuge der Neuausrichtung berechnet entweder der Computer des Koordinatenmeßgerätes oder ein Mikroprozessor in der Steuerung des Gerätes aus diesem Abstand (a) sowie dem gewünschten Schwenkwinkel (θ,ϕ) den Kreisbogen (K1) bzw. (K2), auf dem der Schnittpunkt (29) der Dreh- bzw. Schwenkachsen bei feststehendem Mittelpunkt der Tastkugel (19) verfahren werden muß, damit sich der gewünschte Schwenkwinkel (θ) bzw. Drehwinkel (ϕ) ergibt. Auf dieser Bahn (K1) bzw. (K2) verfährt die Steuerung die Meßschlitten in jeweils zwei Koordinaten (x) und (z) bzw. (x) und (y) gleichzeitig. Auf diese Weise bleibt die Tastkugel (19) in der durch die beiden Spitzen (10a) und (10b) sowie eine weitere, hier nicht sichtbare Spitze (10c) gebildeten Zentrierlücke liegen, während sich die Ausrichtung des Taststifts (9) ändert. Bei entsprechender Ausbildung der Steuerung ist es natürlich auch möglich, in allen drei Raumrichtungen (x, y, z) gleichzeitig, d.h. auf einem frei im Raum liegenden Kreisbogen zu verfahren, um wie durch die gestrichelte Bahn (K3) angedeutet, den Taststift direkt von der vertikal gezeichneten Stellung in die verschwenkt gezeichnete Stellung zu bringen.

Der vorstehend beschriebene Schwenkvorgang des Tasters mit Hilfe der Antriebe des Koordinatenmeßgeräts läßt sich immer "in einem Zug" durchführen, solange der Schwenkwinkel nicht zu groß wird und den Öffnungswinkel der Zentrierlücke überschreitet, in die eingetastet ist. Zur Herbeiführung größerer Schwenkwinkel ist es jedoch ohne weiteres möglich, den Schwenkvorgang zweistufig oder mehrstufig zu gestalten. Hierzu wird erst in eine Zentrierlücke eingetastet und der Taststift um einen kleineren Winkel geschwenkt. Anschließend wird der Taststift aus der Zentrierlücke ausgefahren und es wird dann bei vorübergehender Klemmung des Dreh- Schwenkgelenks (8) in eine andere Zentrierlücke eingetastet, die dann ein Weiterschwenken des Taststifts erlaubt.

Die erforderlichen Zentrierlücken können auf verschiedene Weise realisiert werden. Anstelle der Spitzen des Zentrierkörpers (10) können beispielsweise auch wie in Figur 6 dargestellt auf die Oberfläche einer größeren Kugel (20) Kugeln (20a, 20b) mit kleinerem Durchmesser aufgeklebt werden, oder es können in die Kugeloberfläche konische Bohrungen eingebracht werden.

Außerdem kann anstelle des in Figur 4 dargestellten Dreh-Schwenkgelenks auch ein passives, rastendes Dreh- Schwenkgelenk verwendet werden, wie das in Figur 5 skizziert ist.

Bei diesem Dreh- Schwenkgelenk ist die Oberfläche der Kugel (22) der Lagerung des Gelenks mit einer Vielzahl von konischen Bohrungen versehen und in die Unterseite des zur Klemmung dienenden Teils (24) ist eine zentrische Bohrung eingebracht, in der eine Rastkugel (31) und eine Feder (30) aufgenommen sind. Die Feder (30) hat im Vergleich zur Feder (26), mit der das Teil (24) gegen die Kugel (22) der Lagerung gedrückt wird, eine sehr viel geringere Federkonstante. Auf diese Weise kann im entklemmten Zustand die Kugel (22) mit dem daran befestigten Taststift (9) ohne große Kräfte rastend in diskrete Winkelstellungen ausgerichtet werden, bevor dann anschließend diese Stellung fixiert wird. Dies geschieht, indem mit Hilfe des kombinierten Elektromagneten (27) und Permanentmagneten (28) das Teil (24) gelöst und von der Feder (26) zwecks Klemmung auf die Oberfläche der Kugel (22) gedrückt wird.

Es ist außerdem nicht unbedingt erforderlich, ein Kugelgelenk für die Lagerung des Taststifts einzusetzen. Stattdessen kann beispielsweise auch ein Kardangelenk verwendet werden oder ein beliebiges anderes Gelenk, das mindestens eine, vorzugsweise aber zwei Dreh- bzw. Schwenkachsen besitzt. Diese Achsen müssen sich auch nicht notwendigerweise in einem Punkt schneiden. Denn selbst wenn die Achsen beabstandet sind, können sie jede für sich auf Kreisbögen, allerdings mit unterschiedlichem Durchmesser, in Bezug auf den Mittelpunkt der Tastkugel verfahren werden. Als Lagerung für den Taststift kann beispielsweise auch das in der DE-OS 44 35 401 beschriebene sphärische Lager verwendet werden. Natürlich muß das Gelenk auch nicht zwingend auf Kreisbahnen verfahren werden, auch wenn es sich hierbei um eine vorteilhafte Ausführungsvariante handelt. Selbstverständlich sind auch beliebige andere Bahnen möglich. Entscheidend ist letztlich nur, daß das Gelenk so verfahren wird, daß der Antastformkörper (19) zentriert in der Einrichtung (10) bleibt.

## Patentansprüche

1. Koordinatenmeßgerät mit einem Taststift (9), dessen räumliche Orientierung maschinengesteuert einstellbar ist, wobei der Taststift (9) oder der Tastkopf (7), an dem er befestigt ist, um ein Gelenk in mindestens einer Achse dreh- bzw. schwenkbar gelagert ist und Mittel (14-18; 24-28) zur Hemmung der Schwenkbewegung oder zur Klemmung des Gelenkes vorgesehen sind, **dadurch gekennzeichnet, daß** an dem Teil (1) des Koordinatenmeßgeräts, gegenüber dem der Taststift (9) beweglich ist, eine Einrichtung (10) befestigt ist, von der der Antastformkörper (19) des Taststifts (9) zentriert aufnehmbar ist, und daß die Steuerung des Koordinatenmeßgeräts so ausgebildet ist, daß sie das Gelenk für die Dreh- bzw. Schwenkbewegung des Taststifts (9) auf derartigen Bahnen verfahren kann, daß der Antastformkörper (19) zentriert in der Einrichtung (10) bleibt.

2. Koordinatenmeßgerät nach Anspruch 1, **dadurch gekennzeichnet, daß** die Einrichtung zur zentrierten Aufnahme des Antastformkörpers (19) ein auf seiner Oberfläche mit einer Vielzahl von Zentrierstellen versehener, konvexer Körper (10, 20) ist.

3. Koordinatenmeßgerät nach Anspruch 2, **dadurch gekennzeichnet, daß** der Körper (10) nach Art eines Igels oder eines Morgensterns aufgebaut ist.

4. Koordinatenmeßgerät nach Anspruch 2, **dadurch gekennzeichnet, daß** die Zentrierstellen aus einer Vielzahl von nebeneinanderliegenden sphärischen Körpern (20a, 20b) gebildet sind.

5. Koordinatenmeßgerät nach Anspruch 1, **dadurch gekennzeichnet, daß** der Taststift (9) um zwei aufeinander senkrecht stehende Achsen schwenkbar gelagert ist.

6. Koordinatenmeßgerät nach Anspruch 1, **gekennzeichnet durch** ein Gelenk mit einer Rastvorrichtung (27, 28) für diskrete Winkelstellungen des Taststifts.

7. Koordinatenmeßgerät nach Anspruch 5, wobei das Gelenk ein sphärisches Lager (12, 15) oder ein kardanisches Lager ist.

8. Koordinatenmeßgerät nach einem der Ansprüche 1-7, **gekennzeichnet durch** eine Einrichtung (17, 18) zur maschinengesteuerten Klemmung bzw. Entklemmung des Gelenkes.

9. Koordinatenmeßgerät nach Anspruch 8, wobei die Einrichtung zur Klemmung einen Permanentmagneten (18) und einen Elektromagneten (17) enthält.

10. Verfahren zur maschinengesteuerten Ausrichtung des Taststifts (9) in einem Koordinatenmeßgerät, wobei der Taststift (9) oder der Tastkopf (7), an dem er befestigt ist, um ein Gelenk in mindestens einer Achse dreh- bzw. schwenkbar gelagert ist, **dadurch gekennzeichnet, daß**
- der Taststift (9) mit seinem Antastformkörper (Tastkugel 19) in eine Zentrieraufnahme (10) eingefahren wird,
- dann das Gelenk auf einer Bahn derart verfahren wird, daß der Antastformkörpers (19) zentriert in der Einrichtung (10) bleibt und hierbei eine Dreh- bzw. Schwenkbewegung des Taststifts (9) herbeigeführt wird, und
- anschließend der auf diese Weise neu orientierte Taststift (9) mit seinem Antastformkörper (19) aus der Zentrieraufnahme (10) herausgefahren wird.

11. Verfahren nach Anspruch 10, wobei der Rechner oder die Steuerung des Koordinatenmeßgeräts nach Eingabe der gewünschten Änderung der Ausrichtung des Taststifts (9) entsprechend dem aktuellen Abstand des Antastformkörpers (19) von dem Gelenk (29) die Kreisbahn berechnet, auf der das Gelenk durch simultanes Verfahren mehrerer Meßschlitten (3, 5, 6) des Koordinatenmeßgeräts für den Schritt des Ausrichtens bewegt werden muß.

12. Verfahren nach einem der Ansprüche 10-11, wobei dann, wenn der Taststift (9) über einen größeren Winkelbereich gedreht bzw. geschwenkt werden muß, mehrere einzelne Dreh-bzw. Schwenkvorgänge nacheinander durchgeführt werden und zwischen den einzelnen Vorgängen die Zentrieraufnahme (10a, b) gewechselt wird.

13. Koordinatenmeßgerät mit einem Taststift (9), dessen räumliche Orientierung maschinengesteuert einstellbar ist, wobei der Taststift (9) oder der Tastkopf (7), an dem er befestigt ist, um mindestens eine Achse dreh- bzw. schwenkbar gelagert ist und Mittel (14-18; 24-28) zur Hemmung der Schwenkbewegung oder zur Klemmung der Achse (n) vorgesehen sind, **dadurch gekennzeichnet, daß** an dem Teil (1) des Koordinatenmeßgeräts, gegenüber dem der Taststift (9) beweglich ist, eine Einrichtung (10) befestigt ist, von der der Antastformkörper (19) des Taststifts (9) zentriert aufnehmbar ist, und daß die Steuerung des Koordinatenmeßgeräts so ausgebildet ist, daß sie die Achsen für die Dreh- bzw Schwenkbewegung des Taststifts (9) auf kreisförmigen Bahnen bezogen auf die Position des Antastformkörper (19) als Mittelpunkt verfahren kann.

14. Verfahren zur maschinengesteuerten Ausrichtung des Taststifts (9) in einem Koordinatenmeßgerät, wobei der Taststift (9) oder der Tastkopf (7), an dem er befestigt ist, um mindestens eine Achse dreh- bzw. schwenkbar gelagert ist, **dadurch gekennzeichnet, daß**
- der Taststift (9) mit seinem Antastformkörper (19) in eine Zentrieraufnahme (10) eingefahren wird,
- dann die Dreh- bzw. Schwenkachse auf einer kreisförmigen Bahn bezogen auf die Position des zentrierten Antastformkörpers (19) verfahren und hierbei eine Dreh- bzw. Schwenkbewegung des Taststifts (9) herbeigeführt wird, während der Antastformkörper (19) seine Position in der Zentrieraufnahme (10) beibehält, und
- anschließend der auf diese Weise neu orientierte Taststift (9) mit seinem Antastformkörper (19) aus der Zentrieraufnahme (10) herausgefahren wird.

15. Verfahren nach Anspruch 14, wobei der Rechner oder die Steuerung des Koordinatenmeßgeräts nach Eingabe der gewünschten Änderung der Ausrichtung des Taststifts (9) entsprechend dem aktuellen Abstand des Antastformkörpers (19) von der bzw. den Achse(n) (29) die Kreisbahn berechnet, auf der die Achsen durch simultanes Verfahren mehrerer Meßschlitten (3, 5, 6) des Koordinatenmeßgeräts für den Schritt des Ausrichtens bewegt werden muß.

## Claims

1. Coordinate measuring instrument with a probe pin (9), the spatial orientation of which can be set under machine control, the probe pin (9) or the probe head (7) on which it is fastened being mounted pivotably about a joint in at least one axis and means (14-18; 24-28) being provided for inhibiting the pivoting movement or for clamping the joint, **characterized in that** a device (10) by which the shaped sensing body (19) of the probe pin (9) is received in a centred manner is fastened on the part (1) of the coordinate measuring instrument with respect to which the probe pin (9) is movable, and **in that** the control of the coordinate measuring instrument is designed in such a way that it can move the joint for the pivoting movement of the probe pin (9) on such paths that the shaped sensing body (19) remains centred in the device (10).

2. Coordinate measuring instrument according to Claim 1, **characterized in that** the device for the centred receiving of the shaped sensing body (19) is a convex body (10, 20) provided with a multiplicity of centring locations on its surface.

3. Coordinate measuring instrument according to Claim 2, **characterized in that** the body (10) is similar in structural design to a porcupine or a morning star.

4. Coordinate measuring instrument according to Claim 2, **characterized in that** the centring locations are formed by a multiplicity of spherical bodies (20a, 20b) lying next to one another.

5. Coordinate measuring instrument according to Claim 1, **characterized in that** the probe pin (9) is mounted pivotably about two axes perpendicular to each other.

6. Coordinate measuring instrument according to Claim 1, **characterized by** a joint with a catch mechanism (27, 28) for discrete angular positions of the probe pin.

7. Coordinate measuring instrument according to Claim 5, the joint being a spherical bearing (12, 15) or a cardanic bearing.

8. Coordinate measuring instrument according to one of Claims 1-7, **characterized by** a device (17, 18) for the machine-controlled clamping and unclamping of the joint.

9. Coordinate measuring instrument according to Claim 8, the device for clamping including a permanent magnet (18) and an electromagnet (17).

10. Method for the machine-controlled alignment of the probe pin (9) in a coordinate measuring instrument, the probe pin (9) or the probe head (7) on which it is fastened being mounted pivotably about a joint in at least one axis, **characterized in that**
- the probe pin (9) is made to enter with its shaped sensing body (probe sphere 19) into a centring receptacle (10),
- the joint is then moved on a path in such a way that the shaped sensing body (19) remains centred in the device (10) and in this way a pivoting movement of the probe pin (9) is brought about, and
- subsequently, the probe pin (9) newly oriented in this way is made to move with its shaped sensing body (19) out of the centring receptacle (10).

11. Method according to Claim 10, the computer or the control of the coordinate measuring instrument calculating after input of the desired change of the alignment of the probe pin (9) in accordance with the current distance of the shaped sensing body (19) from the joint (29) the circular path on which the joint must be moved by simultaneous movement of a plurality of measuring carriages (3, 5, 6) of the coordinate measuring instrument for the aligning step.

12. Method according to one of Claims 10-11, whenever the probe pin (9) has to be pivoted over a relatively large angular range, a plurality of individual pivoting operations being carried out one after the other and the centring receptacle (10a, b) being changed between the individual operations.

13. Coordinate measuring instrument with a probe pin (9), the spatial orientation of which can be set under machine control, the probe pin (9) or the probe head (7) on which it is fastened being mounted pivotably about at least one axis and means (14-18; 24-28) being provided for inhibiting the pivoting movement or for clamping the axis (axes), **characterized in that** a device (10) by which the shaped sensing body (19) of the probe pin (9) is received in a centred manner is fastened on the part (1) of the coordinate measuring instrument with respect to which the probe pin (9) is movable, and **in that** the control of the coordinate measuring instrument is designed in such a way that it can move the axes for the pivoting movement of the probe pin (9) on circular paths with respect to the position of the shaped sensing body (19) as a central point.

14. Method for the machine-controlled alignment of the probe pin (9) in a coordinate measuring instrument, the probe pin (9) or the probe head (7) on which it is fastened being mounted pivotably about at least one axis, **characterized in that**
- the probe pin (9) is made to enter with its shaped sensing body (19) into a centring receptacle (10),
- the pivoting axis is then moved on a circular path with respect to the position of the centred shaped sensing body (19) and in this way a pivoting movement of the probe pin (9) is brought about, while the shaped sensing body (19) retains its position in the centring receptacle (10), and
- subsequently, the probe pin (9) newly oriented in this way is made to move with its shaped sensing body (19) out of the centring receptacle (10).

15. Method according to Claim 14, the computer or the control of the coordinate measuring instrument calculating after input of the desired change of the alignment of the probe pin (9) in accordance with the current distance of the shaped sensing body (19) from the axis (axes) (29) the circular path on which the axes must be moved by simultaneous movement of a plurality of measuring carriages (3, 5, 6) of the coordinate measuring instrument for the aligning step.

## Revendications

1. Appareil de mesure de coordonnées avec un palpeur (9), dont l'orientation spatiale est réglable par voie mécanique, dans lequel le palpeur (9) ou la tête de palpeur (7), à laquelle il est fixé, est supporté(e) par une articulation de façon rotative, respectivement pivotante selon au moins un axe et il est prévu des moyens (14-18; 24-28) pour empêcher le mouvement pivotant ou pour bloquer l'articulation, **caractérisé en ce que**, sur la partie (1) de l'appareil de mesure de coordonnées, par rapport à laquelle le palpeur (9) est mobile, est fixé un équipement (10), sur lequel le corps de détection (19) du palpeur (9) peut être installé en position centrée, et **en ce que** la commande de l'appareil de mesure de coordonnées est configurée de telle manière qu'elle peut déplacer l'articulation pour le mouvement rotatif, respectivement pivotant, du palpeur (9) sur des trajectoires telles que le corps de détection (19) reste en position centrée dans l'équipement (10).

2. Appareil de mesure de coordonnées suivant la revendication 1, **caractérisé en ce que** l'équipement pour l'installation centrée du corps de détection (19) est un corps convexe (10, 20) pourvu sur sa surface d'une pluralité de points de centrage.

3. Appareil de mesure de coordonnées suivant la revendication 2, **caractérisé en ce que** le corps (10) est bâti à la manière d'un hérisson ou d'une étoile du matin.

4. Appareil de mesure de coordonnées suivant la revendication 2, **caractérisé en ce que** les points de centrage sont formés par une pluralité de corps sphériques (20a, 20b) placés les uns à côté des autres.

5. Appareil de mesure de coordonnées suivant la revendication 1, **caractérisé en ce que** le palpeur (9) est supporté de façon pivotante autour de deux axes perpendiculaires l'un à l'autre.

6. Appareil de mesure de coordonnées suivant la revendication 1, **caractérisé par** une articulation avec un dispositif d'arrêt (27, 28) pour des positions angulaires discrètes du palpeur.

7. Appareil de mesure de coordonnées suivant la revendication 5, dans lequel l'articulation est un palier sphérique (12, 15) ou un palier à cardan.

8. Appareil de mesure de coordonnées suivant l'une quelconque des revendications 1 - 7, **caractérisé par** un équipement (17, 18) pour le blocage, respectivement le déblocage, mécanique de l'articulation.

9. Appareil de mesure de coordonnées suivant la revendication 8, dans lequel l'équipement de blocage comprend un aimant permanent (18) et un électroaimant (17).

10. Procédé pour l'alignement du palpeur (9) par voie mécanique dans un appareil de mesure de coordonnées, dans lequel le palpeur (9) ou la tête de palpeur (7), à laquelle il est fixé, est supporté(e) par une articulation de façon rotative, respectivement pivotante selon au moins un axe, **caractérisé en ce que**
- le palpeur (9) est amené avec son corps de détection (bille palpeuse 19) dans un logement de centrage (10),
- l'articulation est alors déplacée sur une trajectoire telle que le corps de détection (19) reste centré dans l'équipement (10) et que le palpeur (9) accomplisse ainsi un mouvement tournant, respectivement pivotant, et
- le palpeur (9), nouvellement orienté de cette manière, avec son corps de détection (19) est retiré du logement de centrage (10).

11. Procédé suivant la revendication 10, dans lequel le calculateur ou la commande de l'appareil de mesure de coordonnées calcule, après l'entrée de la modification désirée de l'alignement du palpeur (9) en fonction de la distance actuelle entre le corps de détection (19) et l'articulation (29), la trajectoire circulaire sur laquelle l'articulation doit être déplacée, par un déplacement simultané de plusieurs chariots de mesure (3, 5, 6) de l'appareil de mesure de coordonnées, pour l'étape de l'alignement.

12. Procédé suivant l'une des revendications 10 - 11, dans lequel, lorsque le palpeur (9) doit tourner, respectivement pivoter, d'une plus grande plage angulaire, plusieurs opérations individuelles de rotation, respectivement de pivotement, sont effectuées les unes après les autres et le logement de centrage (10a, b) est changé entre les opérations individuelles.

13. Appareil de mesure de coordonnées avec un palpeur (9), dont l'orientation spatiale est réglable par voie mécanique dans lequel le palpeur (9) ou la tête de palpeur (7), à laquelle il est fixé, est supportée) de façon rotative, respectivement pivotante autour d'au moins un axe et il est prévu des moyens (14-18; 24-28) pour empêcher le mouvement pivotant ou pour bloquer l'axe (les axes), **caractérisé en ce que**, sur la partie (1) de l'appareil de mesure de coordonnées, par rapport à laquelle le palpeur (9) est mobile, est fixé un équipement (10), sur lequel le corps de détection (19) du palpeur (9) peut être installé en position centrée, et **en ce que** la commande de l'appareil de mesure de coordonnées est configurée de telle manière qu'elle peut déplacer les axes pour le mouvement tournant, respectivement pivotant, du palpeur (9) sur des trajectoires circulaires rapportées à la position du corps de détection (19) comme point central.

14. Procédé pour l'alignement du palpeur (9) par voie mécanique, dans un appareil de mesure de coordonnées, dans lequel le palpeur (9) ou la tête de palpeur (7), à laquelle il est fixé, est supportée) de façon rotative, respectivement pivotante autour d'au moins un axe, **caractérisé en ce que**
- le palpeur (9) est amené avec son corps de détection (19) dans un logement de centrage (10),
- l'axe de rotation, respectivement de pivotement, est alors déplacé sur une trajectoire circulaire rapportée à la position du corps de détection centré (19) et que le palpeur (9) accomplisse ainsi un mouvement tournant, respectivement pivotant, tandis que le corps de détection (19) conserve sa position dans le logement de centrage (10), et
- le palpeur (9), nouvellement orienté de cette manière, avec son corps de détection (19) est ensuite retiré du logement de centrage (10).

15. Procédé suivant la revendication 14, dans lequel le calculateur ou la commande de l'appareil de mesure de coordonnées calcule, après l'entrée de la modification désirée de l'alignement du palpeur (9) en fonction de la distance actuelle entre le corps de détection (19) et l'axe, respectivement les axes, (29), la trajectoire circulaire sur laquelle les axes doivent être déplacés, par un déplacement simultané de plusieurs chariots de mesure (3, 5, 6) de l'appareil de mesure de coordonnées, pour l'étape de l'alignement.
